(19) Europäisches Patentamt
European Patent Office
Office européen des brevets

(11) **EP 3 754 549 B1**

(12) **EUROPEAN PATENT SPECIFICATION**

(45) Date of publication and mention
of the grant of the patent:
**22.09.2021  Bulletin 2021/38**

(51) Int Cl.:
***G06K 9/62*** *(2006.01)*

(21) Application number: **19180590.2**

(22) Date of filing: **17.06.2019**

(54) **A COMPUTER VISION METHOD FOR RECOGNIZING AN OBJECT CATEGORY IN A DIGITAL IMAGE**

COMPUTERVISIONSVERFAHREN ZUM ERKENNEN EINER OBJEKTKATEGORIE IN EINEM DIGITALEN BILD

PROCÉDÉ DE VISION PAR ORDINATEUR POUR RECONNAÎTRE UNE CATÉGORIE D'OBJETS DANS UNE IMAGE NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2020  Bulletin 2020/52**

(73) Proprietor: **SAP SE**
**69190 Walldorf (DE)**

(72) Inventors:
• **GARCIA PEREZ, Enrique**
**69190 Walldorf (DE)**
• **PAHDE, Frederik**
**69190 Walldorf (DE)**
• **NABI, Moin**
**69190 Walldorf (DE)**
• **KLEIN, Tassilo**
**69190 Walldorf (DE)**

(74) Representative: **Richardt Patentanwälte PartG mbB**
**Wilhelmstraße 7**
**65185 Wiesbaden (DE)**

(56) References cited:
**US-B1- 10 049 308**

• **HAN ZHANG ET AL: "StackGAN: Text to Photo-realistic Image Synthesis with Stacked Generative Adversarial Networks", ARXIV.ORG, CORNELL UNIVERSITY LIBRARY, 201 OLIN LIBRARY CORNELL UNIVERSITY ITHACA, NY 14853, 10 December 2016 (2016-12-10), XP080738277, DOI: 10.1109/ICCV.2017.629**

## Description

### TECHNICAL FIELD

The disclosure relates to computer vision, and particularly to a computer vision method for recognizing an object category in a digital image.

### Background

Object categorization may be a challenging problem as the objects belonging to the same category may vary greatly in various respects. For example, in the category birds, large variations in shapes and color appearances may be present in different birds e.g. they may vary in colors and may have pictures or patterns on them. However, the objects have to be recognized as belonging to the same category despite such diversity. The same applies analogously to other classes of objects. In "Stack-GAN: Text to Photo-realistic Image Synthesis with StackedGenerative Adversarial Networks, (CORNELL UNIVERSITY LIBRARY, 10 December 2016, DOI: 10.1109/ICCV.2017.629), Zhang et al. disclose synthetising images from text descriptions.

### Summary

It is an objective of embodiments of the invention to provide for a computer vision method for recognizing an object category in a digital image, method of generating a training data set for training a classifier, computer program and a system. Said objective is solved by the subject matter of the independent claims. Advantageous embodiments are described in the dependent claims.

In one aspect, the invention relates to a method of generating a training data set for training a classifier as defined in claim 1.

Furthermore, the invention relates to computer vision method for recognizing an object category in a digital image as defined in claim 12.

In another aspect, the invention relates to a computer program comprising machine executable instructions for execution by a processor, wherein execution of the machine executable instructions causes the processor to perform the method of any one of the preceding embodiments.

In another aspect, the invention relates to a system configured to perform a method of any one of the preceding embodiments.

It is understood that one or more of the aforementioned embodiments may be combined as long as the combined embodiments are not mutually exclusive.

The details of one or more implementations are set forth in the accompanying drawings and the description below. Other features will be apparent from the description and drawings, and from the claims.

### Brief description of the drawings

FIG. 1 depicts a schematic block diagram of a computer system in accordance with an example of the present subject matter.

FIG. 2 is a flowchart of a method for generating a training dataset in accordance with an example of the present subject matter.

FIG. 3 is a flowchart of a method for training a generative model in accordance with an example of the present subject matter.

FIG. 4 is a flowchart of a computer vision method for recognizing an object category in a digital image in accordance with an example of the present subject matter.

FIG. 5 is a diagram of a computer system for training a text-conditional generative model in accordance with an example of the present subject matter.

FIG. 6 is a table showing examples results in accordance with an example of the present subject matter.

Like reference symbols in the various drawings indicate like elements.

### Detailed description

The present subject matter may provide efficient means for generating digital images based on textual descriptions. The present method makes use of computer systems for generating digital images. In particular, the generation of digital images may be facilitated and accelerated using the trained generative model. For example, instead of an ad-hoc separate analysis of each image in order to generate additional data from the image, the present method may enable a systematic and reliable method for generating data. The present method may make data, in particular the generated images, available in numerical form that is suitable for quantitative interpretation. This may increase the accuracy of observational data. For example, the output visual data samples of the novel classes may be provided, e.g. to another computer system or user, for further processing by the computer system. In one example, the method may further comprise training the classifier using the training data set, inputting an image to the trained classifier and recognizing an object category or class of the image by the classifier.

The present subject matter enables to generate further data for enabling object recognition. This may particularly be advantageous as the lack of data representing objects of novel classes is one of the most challenging problems in object recognition.

The present subject matter may enable a digital image analysis for recognizing objects in digital images. For example, using the trained classifier may enable the classification of input digital images based on low-level features such as edges or pixel attributes of digital images.

A class or object class refers to a set of objects that are similar in shape and appearance such as human faces, bodies, cars, bird species, flowers, etc. The classes may be novel classes or unseen classes. A novel class refers to a class that is represented by a number of images (having that novel class) that is smaller than a predefined number of images e.g. 10. The base classes may be different from the novel classes. The base classes may be classes for which there is sufficient data samples, and novel classes are underrepresented in the data. A base class refers to a class that is represented by a number of images (having that base class) that is larger than the predefined number of images.

The amount of the first set of multi-modal training samples is much higher than the amount of the second set of multi-modal training samples e.g. the number of the first set of multi-modal training samples is 100 times higher than the number of the second set of multi-modal training samples. This may enable to use a large amount of data of base classes to learn a meaningful representation of the data. And doing so in multi-modal fashion yields a mapping between text space and image space that may allow a cross-modal generation, facilitating the compensation of the lack of data of novel classes.

In one example, the first textual data samples may be text descriptions of the respective first visual data samples. The second textual data samples may be text descriptions of the respective second visual data samples. The first visual data samples may comprise images. The second visual data samples may comprise images.

For example a text encoder may be provided. The text encoder may encode each first textual sample of the first set and each second textual sample of the second set to provide a respective first and second text embedding representation (or textual feature vector) in a textual embedding space. The generative model may be configured to generate a visual data sample from each text embedding representation of the first and second text embedding representations. For example, the transforming by the generative model of the second textual data samples into output visual data samples of the novel classes comprises encoding each second textual sample of the second set to provide a respective second text embedding representation, transforming the second text embedding representation into the output visual data samples.

The generative model may for example be trained using a loss function based on a Mean Squared Error (MSE). According to one embodiment, the training of the generative model G comprises: providing a discriminative model D, training the generative model and the discriminative model using the first set of multi-modal training samples, the training comprising:

training the generative model to generate visual data samples from the first textual samples and training the discriminative model, using generated visual data samples by the generative model and the first visual data samples, to determine if a visual data sample is a first visual data sample of the first set or a generated visual data sample, wherein the training is performed with backpropagation for optimizing in an adversarial way a loss function of the generative model and another loss function of the discriminative model. The first visual data samples may be real visual data samples as they, for example, comprise images which are not generated by the generative model.

This may enable that the optimizing of the loss functions is performed in an adversarial way.

For example, the generative model and discriminative model may be the generator and discriminator of a GAN framework. For example, the discriminator looks at real visual data samples (e.g. real images) and generated visual data samples separately. The discriminator may distinguish whether an input visual data sample is real or generated. This may enable to condition the generator with textual samples. Instead of generating images from noise only, textual samples may be combined with noise and may be used by the generative model to generate the images. The training of the generator and discriminator of the GAN may then be performed in an adversarial way as with training the GAN, but the generator is conditioned with the textual samples. This may enable a better convergence of the training.

Both networks of the discriminative model and generative model are trained in alternating steps. For example, the generative model's parameters may be fixed and a single iteration of gradient descent on the discriminative model is performed using the real and the generated visual data samples. Then the discriminative model's parameters may be fixed and the generative model may be trained for another iteration.

For example, the two models may alternatively be trained to compete with each other. The generative model is optimized to reproduce the true data distribution by generating images that are difficult for the discriminative model to differentiate from real images. Meanwhile, the discriminative model is optimized to distinguish real images and synthetic images generated by the generative model. This embodiment may enable to train the generative model in an adversarial way such that the discriminative model may be in a feedback loop with the ground truth of the images and the generative model may be in a feedback loop with the discriminative model. For example, the discriminative model may receive visual data samples which are labeled as being generated from real images or as being provided by the generative model.

According to one embodiment, the generative model is a generator of a GAN framework and the discriminative model is a discriminator of the GAN, or the generative model comprises a generator of the multiple generators of a stackGAN framework and the discriminative model comprises corresponding discriminator of the multiple discriminators of the stackGAN.

The generative model may for example be a last stage generator (e.g. a Stage-II generator) of the stackGAN framework. For example, the Stage-I generator of the stackGAN draws a low-resolution image by sketching rough shape and basic colors of the object from the given text and painting the background from a random noise vector. Conditioned on Stage-I results, the Stage-II generator corrects defects and adds compelling details into Stage-I results, yielding a more realistic high-resolution image. This embodiment may improve quality of generated images as it may make use of existing frameworks that are optimized for training the generative models.

The generative model is configured to receive textual feature vectors representing the textual samples (e.g. of the first and second textual samples) in a text space. Those vectors may be pre-stored vectors that may be used by the generative model for the training of the generative model.

According to one embodiment, the transforming of the second textual data samples comprises transforming text embedding representations of a predefined textual embedding space of the second textual data samples into image embedding representations (visual feature vectors) of a predefined visual embedding space. The output visual data samples may comprise the image embedding representations (or visual feature vectors).

For example a text encoder may be provided. The text encoder may encode each second textual sample to provide a text embedding representation (or textual feature vector) in the textual embedding space. The generative model may be configured to generate from the textual feature vectors visual feature vectors (instead of images) of the visual embedding space. The visual embedding space may for example be defined by a last hidden layer of a trained CNN having a softmax classification layer with a number of units corresponding to a predefined number of object classes e.g. Cbase. The text encoder may for example be a trained text-based CNN e.g. a hybrid character-level convolutional recurrent neural network. In one example, the training of the text encoder may use textual samples descriptive of images having the classes of the base classes. The representation vector in an embedding space has a lower dimensionality than the original image. Consequentially, the generation of feature vectors is a computational cheaper task compared to the generation of images.

According to one embodiment, the output visual data samples comprise digital images.

The method further comprises ranking the output visual data samples in accordance with an image quality of the output visual data samples, selecting a subsample of the output visual data samples based on the ranking, the training set comprising the selected subsample. This increases the quality of used generated images and may further improve the image classification by the classifier being trained by the training data. This enables to select adequate images of the generated images that allow for building a better classifier within the few-shot scenario.

In order to increase the quality of used generated images, the score of the discriminative model D is used as a measure for ranking and assessing the quality of the generated images.

According to one embodiment, further comprises generating another discriminative model D' from the trained discriminative model. The generating comprises: replacing an output layer of the trained discriminative model by an output layer having one output neuron per class of the novel classes; linking each of the nodes of the replaced output layer to the last hidden layer; initializing (e.g. with random values) the weight values of the weights of the links between the last hidden layer and the output layer; training the generated discriminative model using the second visual data samples. In one example, the output layer may further have one output neuron per class of the base classes. This discriminative model may be provided as a pre-trained model for obtaining discriminative model D'. And Since the first set of multi-modal training samples may be provided in larger amount as they are of the base classes Cbase, discriminative model D may converge to relatively stable parameters, which can then be fine-tuned on a smaller dataset formed by the second visual data samples to obtain the discriminative model D'.

This embodiment may be advantageous, since the discriminative model D' further possess a class-discriminative information, the ranking and the assessing the quality of the generated images may further be improved compared to the discriminative model D.

According to one embodiment, the ranking comprises: entering the output visual data samples into the discriminative model D', outputting by the discriminative model D' a categorization into one of the novel classes and the respective score per entered output visual data sample, the score being indicative of the image quality, using the respective scores as ranking values. The scoring of the generated images by the discriminative model may be an accurate scoring based on features of the images. This may further increase the quality of the generated images and may further improve the image classification by the classifier being trained by the training data.

This embodiment may enable a two-stage/phase framework for image generation. In a first phase, the generative model G is trained to generate images given a textual description. In a second phase, a class-discriminative finetuning is performed in order to learn how to select the most discriminative images out of the generated data.

According to one embodiment, uniting the first visual data samples, the second visual data samples and the selected visual data samples into one set of data samples to provide the training data set for training the classifier.

According to one embodiment, the generative model G generates the visual data samples in response to inputting of the second textual data samples using conditioning augmentation. The conditioning augmentation may be used as described for example with the conditioning augmentation of the stackGAN framework.

According to one embodiment, the selection criterion is a threshold value for the score.

According to one embodiment, at least the discriminative model D is a convolutional neural network. Using the convolutional neural network may be advantageous as it may use little pre-processing compared to other image classification algorithms.

According to one embodiment, the number of base classes is greater than the number of novel classes. This may enable an accurate training of the generative model and thus may further improve the quality of the produced images and may improve the classification of images by the classifier.

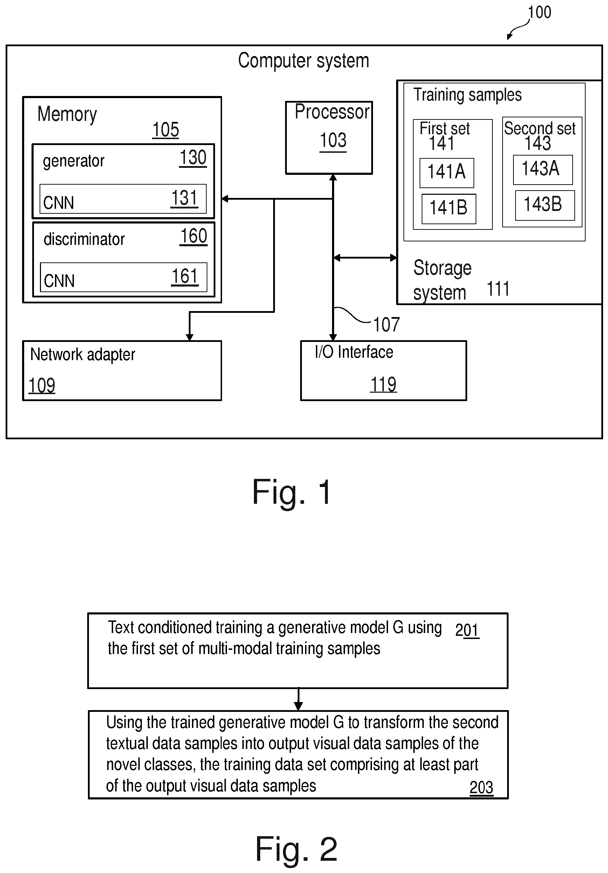

**Figure 1** depicts a schematic block diagram of a computer system 100 in accordance with an example of the present subject matter. The computer system 100 may be a mobile phone, measuring device, smartphone, PDA, laptop, netbook or workstation.

The components of the computer system 100 may include, but are not limited to, one or more processors or processing units 103, a storage system 111, a memory unit 105, and a bus 107 that couples various system components including memory unit 105 to processor 103. The storage system 111 may include for example a hard disk drive (HDD). The memory unit 105 may include computer system readable media in the form of volatile memory, such as random access memory (RAM) and/or cache memory.

The computer system 100 may communicate with one or more external devices such as a keyboard, a pointing device, a display, etc.; one or more devices that enable a user to interact with the computer system 100; and/or any devices (e.g., network card, modem, etc.) that enable the computer system 100 to communicate with one or more other computing devices. Such communication may occur via I/O interface(s) 119. Still yet, the computer system 100 may communicate with one or more networks such as a local area network (LAN), a general wide area network (WAN), and/or a public network (e.g., the Internet) via a network adapter 109. As depicted, the network adapter 109 communicates with the other components of the computer system 100 via bus 107. The memory unit 105 is configured to store applications that are executable on the processor 103. For example, the memory unit 105 may comprise an operating system as well as application programs.

The memory unit 105 may comprise a generator 130. The generator 130 may comprise a generative model 131. The generative model 131 may for example be a CNN. The generative model 131 may be referred to as a text-conditional generative network. The memory unit 105 may comprise a discriminator 160. The discriminator 160 may comprise a discriminative model 161. The discriminative model 161 may for example be a CNN.

The storage system 111 may comprise a first set of multi-modal training samples 141 comprising first visual data samples 141A and first textual data samples 141B of a number of base classes $C_{base}$. The storage system 111 may further comprise a second set of multi-modal training samples 143 comprising second visual data samples 143A and second textual data samples 143B of a number of novel classes $C_{novel}$.

The classes of the samples 141 and 143 are split into the base classes $C_{base}$ for which many samples exist and the novel classes $C_{novel}$ with just a few samples. In this scenario, data from base classes $C_{base}$ can be used to learn meaningful representations to perform few-shot learning on novel classes $C_{novel}$. The samples 141 and 143 enable a multi-modal training, such that training samples are tuples $x^i = (I^i, T^i)$ consisting of an image $I^i \in I$ and a textual sample $T^i \in T$, where $I$ and T are the image space and text space respectively.

The system of Figure 1 may be configured to train the generative model 131 as described in Figure 2, Figure 3 or Figure 5 such that the generative model learns a mapping from a textual description into an image.

**Figure 2** is a flowchart of an example method of generating a training data set for training a classifier in accordance with the present subject matter. The classifier may be an image classifier.

For example, the classifier may be a CNN or another type of classifiers that can be used for the present subject matter. The CNN of the classifier may comprise two convolutional layers and two max-pooling layers, followed by two linear layers that are connected with dropout and finally a softmax layer with $C_{novel}$ units (the number of units in the softmax layer is equal to the number classes $C_{novel}$).

In this example, the first visual data samples 141A may comprise images of objects belonging to the base classes $C_{base}$. The first textual data samples 141B may comprise textual descriptions of objects belonging to the base classes $C_{base}$. The second visual data sample 143A may comprise images of objects belonging to the novel classes $C_{novel}$. The second textual data samples may comprise textual descriptions of objects belonging to the novel classes $C_{novel}$. In one example, the first textual data samples may be text descriptions of the respective the first visual data samples. The second textual data samples may be text descriptions of the respective second visual data samples.

In step 201, the generative model 131 may be trained using the first set of multi-modal training samples 141. For the training, the generator 130 may be configured to sample a noise from a noise prior

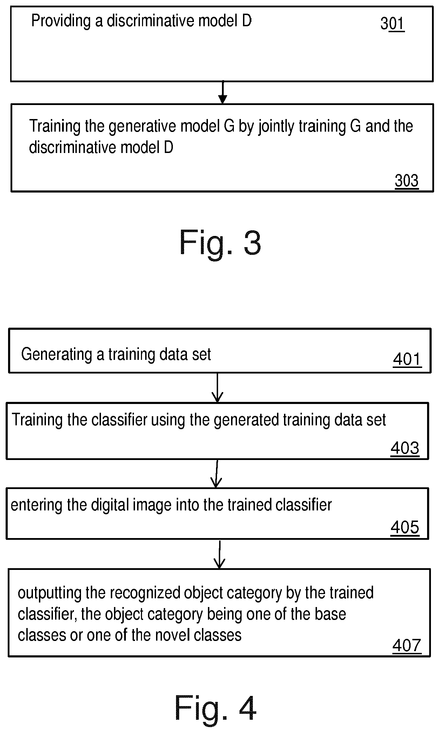

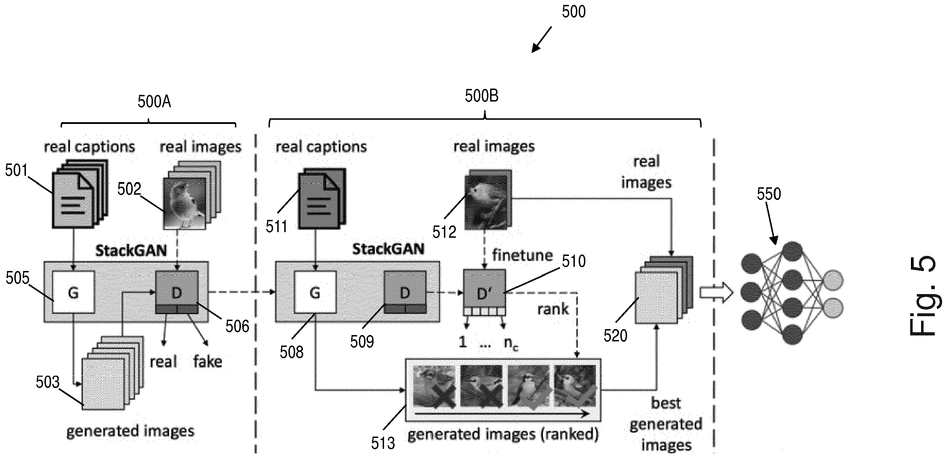

$z \in \mathbb{R}^Z \sim N(0,1)$ and to combine the noise with a first textual sample $t_i$ 141B. The generative model 131 may generate from the noised textual sample an image. Thus, the image generation by the generative model 131 corresponds to a feed-forward inference in the generative model conditioned on a query text and a noise sample. The inference may proceed as in a normal deconvolutional network to feed-forward it through the generative model. Figures 3 and 5 provide examples of training the generative model.

In another example, the generative model may be configured or trained to process feature vectors derived from textual data samples. For that, the text encoder may encode each first textual sample of the first set to provide a text embedding representation (or textual feature vector) in the textual embedding space. The generative model 131 may be configured to generate images from the text embedding representations during the training. This may be advantageous as it may reduce the size of processed data during the training.

The trained generative model 131 may be used to transform the second textual data samples 143B into (or generate from the second textual data samples) output visual data samples of the novel classes $C_{novel}$. The training data set comprises at least part of the output visual data samples.

In another example, if the generative model is trained on feature vectors, the transforming of the second textual data samples may comprise encoding by the text encoder each second textual sample to provide a text embedding representation (or textual feature vector) in the textual embedding space. The generative model may be configured to generate from the text embedding representations image embedding representations (visual feature vectors) of a predefined visual embedding space. The output visual data samples may comprise the image embedding representations (or visual feature vectors). The classifier may be trained using the generated training data set.

**Figure 3** is a flowchart of a method for training the generative model 131. In step 301, a discriminative model D 161 may be provided. In step 303, the generative model 131 and the discriminative model 161 may be trained (or jointly be trained) using the first set of multimodal training samples 141. For example, the generative model and discriminative model may be the generator and discriminator of a GAN framework (cf. I. Goodfellow, J. Pouget-Abadie, M. Mirza, B. Xu, D. Warde-Farley, S. Ozair, A. Courville, and Y. Bengio. Generative adversarial nets. In NIPS, pages 2672-2680, 2014.). For example, the generative model 131 may be trained to generate visual data samples from the first textual samples 141B and the discriminative model 161 may be trained using generated visual data samples by the generative model and the first visual data samples 141A, to determine if a visual data sample is a first visual data sample (real image) of the first set or a generated visual data sample (fake image). The generative model 131 and the discriminative model 161 may be trained by optimizing a GAN or stackGAN loss function,

The optimization of the loss function for the discriminative model may for example comprise backpropagation of error information indicative of the error produced by the neural network of the discriminative model when it makes predictions of a real or false image. The optimization of the loss function for the generative model may for example comprise backpropagation of error information indicative of the error produced by the neural network of the generative model when it generates an image. For that, the discriminative model 161 may for example be in a feedback loop with a label indicating *real* or *false* images 611 and the generative model 131 may for example be in a feedback loop with the discriminative model 161.

**Figure 4** is a flowchart of a computer vision method for recognizing an object category in a digital image. For example, the digital image may contain a fixed number of rows and columns of pixels, wherein pixels are the smallest individual element in an image, holding values that represent the brightness of a given color at any specific point. The digital image may for example comprise 28 x 28 pixels.

A training data set may be generated in step 401 e.g. by executing the steps of Figure 2. For example, the training dataset may comprise the resulting output visual data samples of the novel classes $C_{novel}$ of Figure 2. Alternatively or in addition, the training dataset may comprise the second visual data samples 143A. This may enable to augment the few-shot training dataset that consists of the second visual data samples 143A. Each sample of the samples of the training dataset may be labeled by the class to which it belongs.

The classifier is trained in step 403 using the generated training data set. The training of the classifier may be performed for object class recognition by the classifier using only the few-shot training dataset.

The trained classifier may receive in step 405 as input the digital image to be classified. The class of the input digital image may be a novel class $C_{novel}$ that may need to be determined. In step 407, the recognized object category by the trained classifier of the input digital image may be provided. For example, the recognized object category by the trained classifier of the input digital image may be output to a user or to another computer system for further processing of the recognized object category.

**Figure 5** is a diagram of a computer system 500 for training a text-conditional generative model 505 (such as the generative model 131) in accordance with an example of the present subject matter as indicated by stage 500A of Figure 5 before being used for generating or augmenting a few-shot training dataset as indicated in stage 500B of Figure 5.

The computer system 500 further comprises a discriminative model 506 that may be used for training the generative model 505 as follows. For example, the generative model 505 and the discriminative model 506 may jointly be trained using the textual samples (or real captions) 501 that are descriptive of images of classes $C_{base}$. The discriminative model 506 may further be configured to be trained by real images 502 of classes $C_{base}$. The generative model 505 may be trained to generate images 503 from the real captions 501 (e.g. from each real caption a corresponding image 503 may be generated). The generation of an image 503 from a real caption 501 may be performed by sampling a noise from a noise prior $z \in \mathbb{R}^Z \sim N(0,1)$. The noise may be combined with the real caption 501. The generative model 131 may generate from the noised real caption that image 503. And the discriminative model 506 may be trained to determine if a generated image 503 is a real image or fake (generated) image. Furthermore, the discriminative model 506 may determine if a received real image 502 is a real or fake image.

The generative 505 and discriminative 506 models may be part of a stackGAN framework (cf. Han Zhang, Tao Xu, Hongsheng Li, Shaoting Zhang, Xiaogang Wang, Xiaolei Huang, and Dimitris Metaxas, "Stackgan: Text to photo-realistic image synthesis with stacked generative adversarial networks," in ICCV, 2017.).

The generative model 505 and the discriminative model 506 may be trained by optimizing the loss function of a stackGAN. For example, the generative model may be a stage II generator of the stackGAN and the discriminative model may be the corresponding discriminator (of the same stage) of the stackGAN.

The resulting trained generative model 508 and trained discriminative model 509 are shown in stage 500B of Figure 5. The trained generative model 508 is configured to receive real captions 511 descriptive of images of classes $C_{novel}$ and to generate corresponding images 513. At least part of the generated images 513 can augment the few-shot training set. The few-shot training set may comprise real images 512 of classes $C_{novel}$. For example, the generated images 513 may be ranked and a subset of the generated images 513 may be selected based on the ranking e.g. the subject of images may comprise the first J ranked images (e.g. first J=10 images). The at least part of the generated images 513 is that subset.

For performing the ranking, a new discriminative network 510 may be generated by replacing the output layer of the trained discriminative model 509 by a linear layer having one output neuron per class of the novel classes $C_{novel}$. The linear layer may further have one output neuron per class of the base classes $C_{base}$. The discriminative network 510 is then finetuned (or further trained) using the few images 512 of $C_{novel}$. Next, per category generated images 513 are ranked based on the score of the output neuron corresponding to the given class. The discriminative network 510 may for example be trained using a multiclass loss function with a softmax layer.

Image classifier 550 may be built or trained using the augmented few-shot training dataset $D_{train} = I_{real} \cup I_{generated}$, where $I_{real}$ are the real images 512 of the few-shot training set and $I_{generated}$ are the selected subset of generated images based on the scores (e.g. the subset of images may comprise images having a score higher than a predefined threshold) of the output neurons of the discriminative network 510.

In order to improve the quality of the generated images 513, the generative model 505 and the discriminative model 506 may be trained in the GAN or stackGAN framework.

The computer system 500 provides a few-shot learning benchmark that works with multi-modal data. The system enables to model a few-shot framework, which consists of multiple stages e.g. 500A and 500B, for learning a representation on a large training data corpus 501 and 502 followed by few-shot finetuning for novel categories with few training samples 512.

At least part of the present method may be tested using images 502 and 512 from known databases as follows. A CUB-200 dataset may be obtained from the CUB-200-2011 data source with bird data. The CUB-200 dataset contains 11,788 images of 200 different bird species, with $\mathcal{I} \subset \mathbb{R}^{256 \times 256}$. The dataset is split equally into training and test data. As a consequence, samples are roughly equally distributed, with a training and test set each containing 30 images per category or class. Additionally, 10 short textual descriptions per image are provided. A text-encoder pre-trained yielding a text embedding space $T \subset \mathbb{R}^{1024}$ with a CNN-RNN-based encoding function may be used. The dataset is split such that $|C_{base}| = 150$ and $|C_{novel}| = 50$. To perform few-shot learning, $n \in \{1,2,5,10,20\}$ images of $C_{novel}$ are used for training.

In the representation learning phase (the first phase) a StackGAN is trained in a setup of stackGAN (e.g. as described in Han Zhang, Tao Xu, Hongsheng Li, Shaoting Zhang, Xiaogang Wang, Xiaolei Huang, and Dimitris Metaxas, "Stackgan: Text to photo-realistic image synthesis with stacked generative adversarial networks," in ICCV, 2017.) for 600 epochs, yielding D and G. For training e.g. the classifier 550, a stochastic gradient descent (SGD) is used for 800 epochs with a learning rate of 0.01 and momentum of 0.5.

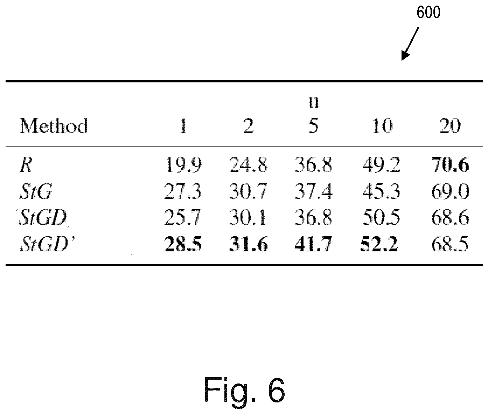

Experiments are composed in following steps: In step 1) a baseline (experiment R) in which the classifier 550 is trained only on real data 512, i.e. n images per category is provided. In step 2) images are generated using the generative model G conditioned on one caption randomly chosen (out of 10) for the missing 30 - n images of $C_{novel}$. Following this, the classifier 550 is trained on an extended dataset that contains the real data 512 and the generated data 513 (experiment StG). In step 3), the 30 - n captions containing the most discriminative information may be selected by making use of the term frequency - inverse document frequency (TF-IDF). For this, the TF-IDF scores are summed for every word in a caption, excluding stop words. Then 10 images are generated per chosen caption with the generative model G, and the generated images are ranked by the score of the discriminative (real vs. fake discriminative) model D (experiment StGD), of which again 30 - n are retained. Step 4) is similar to step 3), with difference of employing the class-discriminative D' for ranking the generated images (experiment StGD'). Doing that, images are not only selected based on their realistic appearance only, but based on how class-discriminative they are. The top-5 accuracy of the classifier for the different experiments are reported in table 600 of Figure 6.

The result of the present method improves the result of the baseline by a large margin in the particular challenging few-shot scenarios with n = 1; 2; 5 by 4.9 to 8.6 percentage points, respectively. In addition to commonly reported top-5 accuracies, the experiments are evaluated with top-1 and top-3 accuracies and observed similar performance results. Forcing the discriminator to select images based on a class-discriminative score by means of the discriminative model D' leads to higher accuracies. D' can use a loss function (multiclass loss function using softmax). StackGan loss function is used or optimized for the training of the generative and discriminative models.

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC. Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of nonvolatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser. Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some causes be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. The preceding figures and accompanying description illustrate the example processes and computer implementable techniques. But example environment (or their software or other components) contemplate using, implementing, or executing any suitable technique for performing these and other tasks. It will be understood that these processes are for illustration purposes only and that the described or similar techniques may be performed at any appropriate time, including concurrently, individually, in parallel, and/or in combination. In addition, many of the operations in these processes may take place simultaneously, concurrently, in parallel, and/or in different orders than as shown. Moreover, the example environment may use processes with additional, fewer and/or different operations, as long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "control system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC. Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or nontransitory, as appropriate) suitable for storing computer program instructions and data include all forms of nonvolatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some causes be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

**Claims**

1. A method of generating a training data set for training a classifier comprising:

   • providing a first set of multi-modal training samples comprising first visual data samples and first textual data samples of a number of base classes,
   • providing a second set of multi-modal training samples comprising second visual data samples and second textual data samples of a number of novel classes, the number of training samples per base class in the first set of multi-modal training samples being greater than the number of training samples per novel class in the second set of multi-modal training samples,
   • text conditioned training a generative model G using the first set of multi-modal training samples, the training of the generative model G comprising: providing a discriminative model, training the generative model and the discriminative model using the first set of multi-modal training samples, the training comprising: training the generative model to generate visual data samples from the first textual samples and training the discriminative model, using generated visual data samples by the generative model and the first visual data samples, to determine if a visual data sample is a first visual data sample of the first set or a generated visual data sample, wherein the training is performed with backpropagation for optimizing in an adversarial way a loss function of the generative model and another loss function of the discriminative model;
   • using the trained generative model G to transform the second textual data samples into output visual data samples of the novel classes, the training data set comprising at least part of the output visual data samples,

and **characterized in that** the method further comprises:

   • ranking the output visual data samples in accordance with an image quality of the output visual data samples, wherein a discriminative model's score of the output visual data sample is indicative of the image quality of the output visual data sample, selecting a subsample of the output visual data samples based on the ranking, the training set comprising the selected subsample.

2. The method of claim 1, wherein

   • the generative model is a generator of a GAN and the discriminative model is a discriminator of the GAN, or
   • the generative model comprises at least one of multiple generators of a stackGAN and the discriminative model comprises at least one of multiple discriminators of the stackGAN.

3. The method of any of the preceding claims, the transforming of the second textual data samples comprises transforming text embedding representations of a predefined textual embedding space of the second textual data samples into image embedding representations of a predefined visual embedding space, the output visual data samples comprising image embedding representations.

4. The method of any of the preceding claims 1-2, the output visual data samples comprising digital images.

5. The method of any of the preceding claims 1-4, further comprising: generating another discriminative model D' from the trained discriminative model, the generating comprising:

   • replacing an output layer of the trained discriminative model by an output layer having one output neuron per class of the novel classes and/or base classes;
   • linking each of the nodes of the replaced output layer to the last hidden layer of the trained discriminative model;
   • initializing the weight values of the weights of the links between the last hidden layer and the output layer;
   • training the generated discriminative model D' using the second visual data samples.

6. The method of claim 5, wherein the ranking comprises:

   • entering the output visual data samples into the discriminative model D',
• outputting by the discriminative model D' a categorization into one of the novel classes and the respective score per entered output visual data sample, the score being indicative of the image quality,
• using the respective scores as ranking values.

7. The method of any of the preceding claims, uniting the first visual data samples, the second visual data samples and the selected visual data samples into one set of data samples to provide the training data set for training the classifier.

8. The method of claim 1, wherein the generative model G generates the visual data samples in response to inputting of the second textual data samples using conditioning augmentation.

9. The method of claim 1, the selection criterion being a threshold value for the score.

10. The method of any of the preceding claims, at least the discriminative model D being a convolutional neural network.

11. The method of any of the preceding claims, the number of base classes being greater than the number of novel classes.

12. A computer vision method for recognizing an object category in a digital image comprising

• generating a training data set in accordance with a method of any one of the preceding claims, the first visual data samples comprising images of objects belonging to the base classes and the first semantic data samples comprising textual descriptions of objects belonging to the base classes, the second visual data samples comprising images of objects belonging to the novel classes and the second semantic data samples comprising textual descriptions of objects belonging to the novel classes,
• training the classifier using the generated training data set,
• entering the digital image into the trained classifier,
• outputting the recognized object category by the trained classifier, the object category being one of the base classes or one of the novel classes.

13. The method of any one of the preceding claims, the classifier being a convolutional neural network.

14. A computer system being configured to perform a method of any one of the preceding claims.

15. A computer program, in particular a computer program product or a digital storage medium, comprising computer executable instructions for executing a method of any one of the preceding claims.

**Patentansprüche**

1. Verfahren zum Generieren eines Trainingsdatensatzes zum Trainieren eines Klassifikators, umfassend:

• Bereitstellung eines ersten Satzes multimodaler Trainingsbeispiele, der erste visuelle Beispieldaten und erste textuelle Beispieldaten einer Anzahl von Basisklassen umfasst,
• Bereitstellung eines zweiten Satzes multimodaler Trainingsbeispiele, der zweite visuelle Beispieldaten und zweite textuelle Beispieldaten einer Anzahl von neuartigen Klassen umfasst, wobei die Anzahl der Trainingsbeispiele pro Basisklasse im ersten Satz multimodaler Trainingsbeispiele größer ist als die Anzahl der Trainingsbeispiele pro neuartiger Klasse im zweiten Satz multimodaler Trainingsbeispiele,
• textkonditioniertes Trainieren eines generativen Modells G mit dem ersten Satz multimodaler Trainingsbeispiele, wobei das Trainieren des generativen Modells G umfasst: Bereitstellung eines diskriminativen Modells, Trainieren des generativen Modells und des diskriminativen Modells mit dem ersten Satz multimodaler Trainingsbeispiele, wobei das Trainieren umfasst: Trainieren des generativen Modells zum Generieren visueller Beispieldaten aus den ersten textuellen Beispieldaten und Trainieren des diskriminativen Modells unter Verwendung durch das generative Modell generierter visueller Beispieldaten und der ersten visuellen Beispieldaten, um zu bestimmen, ob ein visueller Beispieldatenpunkt ein erster visueller Beispieldatenpunkt des ersten Satzes oder ein generierter visueller Beispieldatenpunkt ist, wobei das Training mit Backpropagation durchgeführt wird, zur Optimierung einer Verlustfunktion des generativen Modells und einer weiteren Verlustfunktion des diskriminativen Modells nach Adversarial-Prinzip;
• Verwendung des trainierten generativen Modells G zur Transformation der zweiten textuellen Beispieldaten in eine Ausgabe visueller Beispieldaten der neuartigen Klassen, wobei der Trainingsdatensatz mindestens einen Teil der ausgegebenen visuellen Beispieldaten umfasst,

und **dadurch gekennzeichnet, dass** das Verfahren ferner umfasst:

• Ranking der ausgegebenen visuellen Beispieldaten entsprechend einer Bildqualität der ausgegebenen visuellen Beispieldaten, wobei ein Score des diskriminativen Modells für den ausgegebenen visuellen Beispieldatenpunkt die Bildqualität des ausgegebenen visuellen Beispieldatenpunkts angibt, unter Auswahl einer Teilmenge der ausgegebenen visuellen Beispieldaten auf Basis des Rankings, wobei der Trainingsdatensatz die ausgewählte Teilmenge umfasst.

2. Verfahren nach Anspruch 1, wobei

• das generative Modell ein Generator eines GAN und das diskriminative Modell ein Diskriminator des GAN ist, oder
• das generative Modell mindestens einen von mehreren Generatoren eines stackGAN und das diskriminative Modell mindestens einen von mehreren Diskriminatoren des stackGAN umfasst.

3. Verfahren nach einem der vorstehenden Ansprüche, wobei die Transformation der zweiten textuellen Beispieldaten eine Transformation von Text-Embedding-Repräsentationen eines vordefinierten Text-Einbettungsraums der zweiten textuellen Beispieldaten in Image-Embedding-Repräsentationen eines vordefinierten Bild-Einbettungsraums umfasst, wobei die ausgegebenen visuellen Beispieldaten Image-Embedding-Repräsentationen umfassen.

4. Verfahren nach einem der vorstehenden Ansprüche 1 bis 2, wobei die ausgegebenen visuellen Beispieldaten digitale Bilder umfassen.

5. Verfahren nach einem der vorstehenden Ansprüche 1 bis 4, ferner umfassend: Generieren eines weiteren diskriminativen Modells D' aus dem trainierten diskriminativen Modell, wobei das Generieren umfasst:

• Ersetzen einer Ausgabeschicht des trainierten diskriminativen Modells durch eine Ausgabeschicht, die ein Ausgabe-Neuron pro Klasse der neuartigen Klassen und/oder Basisklassen aufweist;
• Verknüpfen jedes der Knoten der ersetzten Ausgabeschicht mit der letzten verdeckten Schicht des trainierten diskriminativen Modells;
• Initialisieren der Gewichtswerte der Gewichte der Verknüpfungen zwischen der letzten verdeckten Schicht und der Ausgabeschicht;
• Trainieren des generierten diskriminativen Modells D' unter Verwendung der zweiten visuellen Beispieldaten.

6. Verfahren nach Anspruch 5, wobei das Ranking umfasst:

• Eingabe der ausgegebenen visuellen Beispieldaten in das diskriminative Modell D',
• Ausgabe, durch das diskriminative Modell D', einer Kategorisierung in eine der neuartigen Klassen und des jeweiligen Score pro ausgegebenem visuellem Beispieldatenpunkt, der eingegeben wurde, wobei der Score die Bildqualität angibt,
• Verwendung der jeweiligen Scores als Ranking-Werte.

7. Verfahren nach einem der vorstehenden Ansprüche, wobei die ersten visuellen Beispieldaten, die zweiten visuellen Beispieldaten und die ausgewählten visuellen Beispieldaten zu einem einzigen Satz Beispieldaten zusammengeführt werden, um den Trainingsdatensatz zum Trainieren des Klassifikators bereitzustellen.

8. Verfahren nach Anspruch 1, wobei das generative Modell G die visuellen Beispieldaten infolge der Eingabe der zweiten textuellen Beispieldaten unter Einsatz von konditionierender Augmentierung generiert.

9. Verfahren nach Anspruch 1, wobei das Auswahlkriterium ein Schwellenwert für den Score ist.

10. Verfahren nach einem der vorstehenden Ansprüche, wobei mindestens das diskriminative Modell D ein gefaltetes neuronales Netzwerk (CNN) ist.

11. Verfahren nach einem der vorstehenden Ansprüche, wobei die Anzahl der Basisklassen größer ist als die Anzahl der neuartigen Klassen.

12. Computervisionsverfahren zum Erkennen einer Objektkategorie in einem digitalen Bild, umfassend

• Generieren eines Trainingsdatensatzes entsprechend einem Verfahren eines der vorstehend genannten Ansprüche, wobei die ersten visuellen Beispieldaten Bilder von Objekten umfassen, die zu den Basisklassen gehören, und die ersten semantischen Beispieldaten textuelle Beschreibungen von Objekten umfassen, die zu den Basisklassen gehören, wobei die zweiten visuellen Beispieldaten Bilder von Objekten umfassen, die zu den neuartigen Klassen gehören, und die zweiten semantischen Beispieldaten textuelle Beschreibungen von Objekten umfassen, die zu den neuartigen Klassen gehören,
• Trainieren des Klassifikators unter Verwendung des generierten Trainingsdatensatzes,
• Eingabe des digitalen Bilds in den trainierten Klassifikator,

• Ausgabe der erkannten Objektkategorie durch den trainierten Klassifikator, wobei die Objektkategorie eine der Basisklassen oder eine der neuartigen Klassen ist.

13. Verfahren nach einem der vorstehenden Ansprüche, wobei der Klassifikator ein gefaltetes neuronales Netzwerk (CNN) ist.

14. Computersystem, das dafür konfiguriert ist, ein Verfahren nach einem der vorstehenden Ansprüche auszuführen.

15. Computerprogramm, insbesondere ein Computerprogrammprodukt oder digitales Speichermedium, das durch einen Computer ausführbare Anweisungen zum Ausführen eines Verfahrens nach einem der vorstehenden Ansprüche umfasst.

**Revendications**

1. Procédé de génération d'un ensemble de données d'apprentissage pour l'apprentissage d'un classifieur comprenant :

• la mise au point d'un premier ensemble d'échantillons d'apprentissage multimodal comprenant des premiers échantillons de données visuelles et des premiers échantillons de données textuelles d'un certain nombre de classes de base,
• la mise au point d'un deuxième ensemble d'échantillons d'apprentissage multimodal comprenant des deuxièmes échantillons de données visuelles et des deuxièmes échantillons de données textuelles d'un certain nombre de classes nouvelles, le nombre d'échantillons d'apprentissage par classe de base dans le premier ensemble d'échantillons d'apprentissage multimodal étant supérieur au nombre d'échantillons d'apprentissage par nouvelle classe dans le deuxième ensemble d'échantillons d'apprentissage multimodal,
• l'apprentissage subordonné au texte d'un modèle génératif G en utilisant le premier ensemble d'échantillons d'apprentissage multimodal, l'apprentissage du modèle génératif G comprenant : la mise au point d'un modèle discriminatif, l'apprentissage du modèle génératif et du modèle discriminatif en utilisant le premier ensemble d'échantillons d'apprentissage multimodal, l'apprentissage comprenant : l'apprentissage du modèle génératif pour générer des échantillons de données visuelles à partir des premiers échantillons textuels et l'apprentissage du modèle discriminatif en utilisant des échantillons de données visuelles générées par le modèle discriminatif, en utilisant des échantillons de données visuelles générées par le modèle génératif et les premiers échantillons de données visuelles pour déterminer si un échantillon de donnée visuelle est un premier échantillon de donnée visuelle du premier ensemble ou un échantillon de données visuelles généré, où l'apprentissage est effectué avec une rétro propagation pour optimiser dans une manière inverse une fonction de perte du modèle génératif et une autre fonction de perte du modèle discriminatif ;
• l'utilisation du modèle G génératif entraîné pour transformer les deuxièmes échantillons de données textuelles en échantillons de données visuelles de sortie des nouvelles classes, l'ensemble de données d'apprentissage comprenant au moins une partie des échantillons de données visuelles de sortie,

et **caractérisé en ce que** le procédé comprend en outre :

• le classement des échantillons de données visuelles de sortie en fonction d'une qualité d'image des échantillons de données visuelles de sortie, où un score de modèle discriminatif de l'échantillon de données visuelles de sortie est indicateur de la qualité d'image de l'échantillon de données visuelles de sortie, la sélection d'une sous-échantillon des échantillons de données visuelles de sortie sur la base du classement, l'ensemble d'apprentissage comprenant le sous-ensemble sélectionné.

2. Procédé selon la revendication 1, dans lequel

• le modèle génératif est un générateur d'un réseau antagoniste génératif, GAN, et le modèle discriminatif est un discriminateur du GAN, ou
• le modèle génératif comprend au moins un parmi de multiples générateurs d'un GAN empilé, StackGAN, et le modèle discriminatif comprend au moins un parmi de multiples discriminateurs du stackGAN.

3. Procédé selon l'une quelconque des revendications précédentes, la transformation des deuxièmes échantillons de données textuelle comprend la transformation de représentations d'inclusion de textes d'un espace d'inclusion textuelle prédéfini des deuxièmes échantillons de données textuelles dans des représentations d'inclusion d'image d'un espace d'inclusion visuel prédéfini, les échantillons de données visuelles de sortie comprenant des représentations d'inclusion d'image.

**4.** Procédé selon l'une quelconque des revendications précédentes 1 ou 2, les échantillons de données visuelles de sortie comprenant des images numériques.

**5.** Procédé selon l'une quelconque des revendications précédentes 1 à 4, comprenant en outre : la génération d'un autre model discriminatif D' à partir du modèle discriminatif ayant fait l'apprentissage, la génération comprenant :

> • le remplacement d'une couche de sortie du modèle discriminatif ayant fait l'apprentissage par une couche de sortie ayant un neurone de sortie par classe parmi les nouvelles classes et/ou classes de base ;
> • la mise en relation de chacun des nœuds de la couche de sortie remplacée à la dernière couche cachée du modèle discriminatif ayant fait l'apprentissage ;
> • l'initialisation des valeurs pondérales des poids des liens entre la dernière couche cachée et la couche de sortie ;
> • l'apprentissage du modèle discriminatif généré D' en utilisant les deuxièmes échantillons de données visuelles.

**6.** Procédé selon la revendication 5, dans lequel le classement comprend :

> • l'entrée des échantillons de données visuelles de sortie dans le modèle discriminatif D',
> • la sortie par le modèle discriminatif D' d'une catégorisation en une des nouvelles classes et le score respectif par échantillon de données visuelles de sortie entré, le score étant indicateur de la qualité de l'image,
> • l'utilisation des scores respectifs en tant que valeurs de classement.

**7.** Procédé selon l'une quelconque des revendications précédentes, l'unification des premiers échantillons de données visuelles, des deuxièmes échantillons de données visuelles et des échantillons de données visuelles sélectionnés dans un ensemble d'échantillons de données pour fournir l'ensemble de données d'apprentissage pour faire l'apprentissage du classifieur.

**8.** Procédé selon la revendication 1, dans lequel le modèle génératif G génère les échantillons de données visuelles en réponse à l'entrée des deuxièmes échantillons de données textuelles en utilisant une augmentation de conditionnement.

**9.** Procédé selon la revendication 1, le critère de sélection étant une valeur limite pour le score.

**10.** Procédé selon l'une quelconque des revendications précédentes, l'au moins un modèle discriminatif D étant un réseau neuronal convolutif.

**11.** Procédé selon l'une quelconque des revendications précédentes, le nombre de classes de base étant supérieur au nombre de classes nouvelles.

**12.** Procédé de vision par ordinateur pour reconnaître une catégorie d'objets dans une image numérique comprenant :

> • la génération d'un ensemble de données d'apprentissage conformément à un procédé selon l'une quelconque des revendications précédentes, les premiers échantillons de données visuelles comprenant des images d'objets faisant partie des classes de base et les premiers échantillons de données sémantiques comprenant des descriptions textuelles d'objets faisant partie des classes de base, les deuxièmes échantillons de données visuelles comprenant des images d'objets faisant partie des nouvelles classes et les deuxièmes échantillons de données sémantiques comprenant des descriptions textuelles d'objets faisant partie des nouvelles classes,
> • l'apprentissage du classifieur en utilisant l'ensemble de données d"apprentissage générées,
> • l'entrée de l'image numérique dans le classifieur ayant fait l'apprentissage,
> • la sortie de la catégorie d'objet reconnue par le classifieur ayant fait l'apprentissage, la catégorie d'objet étant l'une des classes de base ou l'une des nouvelles classes.

**13.** Procédé selon l'une quelconque des revendications précédentes, le classifieur étant un réseau neuronal convolutif.

**14.** Système informatique étant conçu pour réaliser un procédé selon l'une quelconque des revendications précédentes.

**15.** Programme informatique, en particulier produit-programme informatique ou support de stockage numérique, comprenant des instructions exécutables par ordinateur pour exécuter un procédé selon l'une quelconque des revendications précédentes.

100

Computer system

Memory
105

generator 130

CNN 131

discriminator 160

CNN 161

Processor
103

Training samples

First set 141

141A

141B

Second set 143

143A

143B

Storage system 111

107

Network adapter
109

I/O Interface
119

## Fig. 1

Text conditioned training a generative model G using 201
the first set of multi-modal training samples

Using the trained generative model G to transform the second
textual data samples into output visual data samples of the
novel classes, the training data set comprising at least part
of the output visual data samples 203

## Fig. 2

Providing a discriminative model D   301

Training the generative model G by jointly training G and the
discriminative model D

            303

## Fig. 3

Generating a training data set   401

Training the classifier using the generated training data set

            403

entering the digital image into the trained classifier

            405

outputting the recognized object category by the trained
classifier, the object category being one of the base
classes or one of the novel classes   407

## Fig. 4

Fig. 5

600

| Method | n | | | | |
|--------|------|------|------|------|------|
| | 1 | 2 | 5 | 10 | 20 |
| *R* | 19.9 | 24.8 | 36.8 | 49.2 | **70.6** |
| *StG* | 27.3 | 30.7 | 37.4 | 45.3 | 69.0 |
| *StGD* | 25.7 | 30.1 | 36.8 | 50.5 | 68.6 |
| *StGD'* | **28.5** | **31.6** | **41.7** | **52.2** | 68.5 |

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG.** StackGAN: Text to Photo-realistic Image Synthesis with StackedGenerative Adversarial Networks. CORNELL UNIVERSITY LIBRARY, 10 December 2016
- **I. GOODFELLOW ; J. POUGET-ABADIE ; M. MIRZA ; B. XU ; D. WARDE-FARLEY ; S. OZAIR ; A. COURVILLE ; Y. BENGIO.** Generative adversarial nets. *NIPS,* 2014, 2672-2680

- **HAN ZHANG ; TAO XU ; HONGSHENG LI ; SHAOTING ZHANG ; XIAOGANG WANG ; XIAOLEI HUANG ; DIMITRIS METAXAS.** Stackgan: Text to photo-realistic image synthesis with stacked generative adversarial networks. *ICCV,* 2017